# EUROPEAN PATENT APPLICATION

(11) **EP 0 895 301 A2**
(43) Date of publication of application: **03.02.1999**
(21) Application number: 98114338.1
(22) Date of filing: 30.07.1998
(51) Int. Cl.: H01Q 3/26, H04Q 7/36

(54) **Multiplex radio communication apparatus**

(30) Priority: 30.07.1997 JP 203691/97
(71) Applicant: NEC CORPORATION, Tokyo (JP)
(72) Inventor: Kuwahara, Yoshihiko, Minato-ku, Tokyo (JP)
(74) Representative: Baronetzky, Klaus, Dipl.-Ing.

(57) **Abstract**

A footpeg support for a motorcycle or the like which supports a footpeg (2) and optionally the gearchange or rear brake pedal of the motorcycle, the said support being attached to a vehicle frame (3). This support comprises an articulated structure (1) having at least two elements (5, 6) which are hinged together (at 7) and each of which is fixed (at 9, 10), in a manner such that they can be loosened, to the abovementioned frame (3), one (6) of these elements (5, 6) supporting the footpeg (2), the fact that the means by which these elements (5, 6) are fastened to the frame (3) can be loosened without having to remove the elements themselves from the latter, together with the loosening of the common fastening means (7), making it possible to alter the height of the footpeg (2) from the surface on which the vehicle is located, these fastening means being subsequently tightened and thus locking the footpeg (2) in the position reached.

## Description

The subject of the present invention is a footpeg support for a motorcycle or the like according to the preamble of the main claim.

As is known, a motorcycle usually comprises two footpeg supports positioned on either side of the vehicle; the gearchange or rear brake pedal can also be attached to these supports (one to each of the footpeg supports respectively). These supports are usually fixed to the vehicle frame so that the height of the footpeg from the ground (or from the surface on which the motorcycle rests) cannot be changed, leading to problems in adjusting the abovementioned height for riders having different physical characteristics or using the vehicle in different ways.

Footpeg supports that enable the footpeg-to-ground height to be altered are also known. However, this solution allows only limited and complex adjustment since the body which supports the footpeg is fixed by means of one or more bolts to the vehicle frame. The latter has a plurality of holes designed to accommodate the abovementioned bolts and positioned at various heights from the ground so as to allow the height of the footpeg (from the ground) to be altered. In this embodiment, therefore, the said height can be altered only by detaching the support from its original position and reattaching it in another preselected position, an operation of little, if any, practical advantage. Furthermore, such an operation is also awkward to carry out.

Some competition motorcycles do have adjustable footpegs.

However, any adjustments have to be made directly to the footpegs themselves, for example by detaching them and then reattaching them in another position defined by a plurality of holes in the support.

Another solution is based on an eccentric connection which allows the footpeg to rotate relative to the support (about this eccentric), thereby enabling the height to be altered; in this case, given the wide angle of rotation which the footpeg has to travel through in order to alter its position, and so that the rider's foot can come into contact with the appropriate area, the footpeg must have a simple (cylindrical) shape and not a complicated one - which means that comfort and aesthetics are compromised; this solution, therefore, is not suitable for mass-produced motorcycles.

The object of the present invention is to provide a footpeg support that offers improvements with respect to known supports.

More specifically, the object of the invention is to provide a footpeg support that allows the footpeg-to-ground height to be changed simply, quickly and reliably.

A further object is to provide a footpeg support of the type mentioned that allows the footpeg-to-ground height to be adjusted virtually continuously.

Another object is to provide a footpeg support that can also support the gearchange or rear brake pedal of the motorcycle, thereby enabling their height from the ground to be adjusted too.

These and other objects which will be obvious to a person skilled in the art are achieved by a footpeg support according to the preamble of the main claim.

In order to offer a better understanding of the present invention the following non-limiting and purely representative drawing has been appended, in which:
Figure 1 shows a side view of a footpeg support according to the invention; and

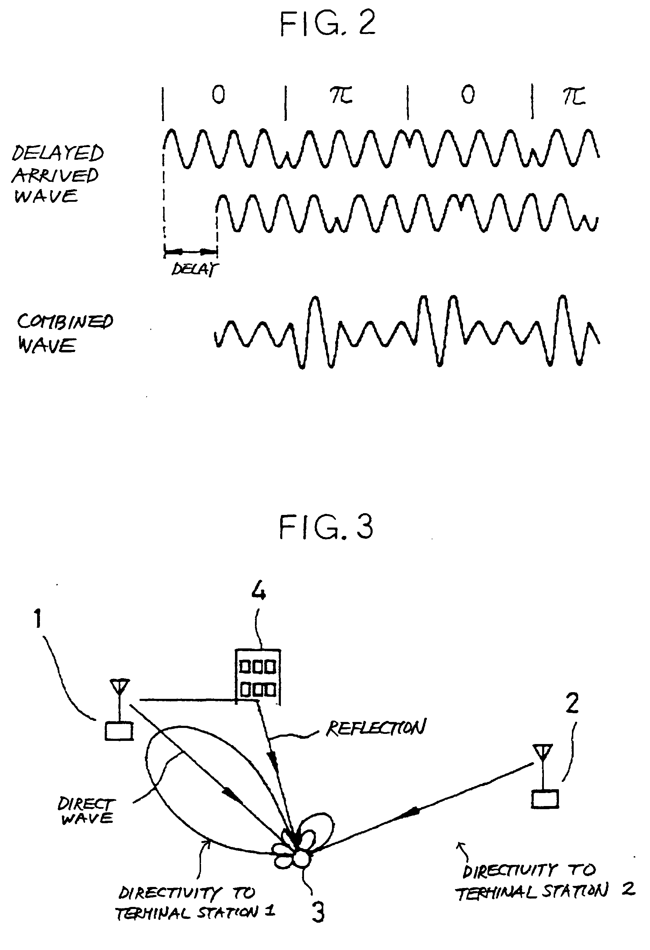

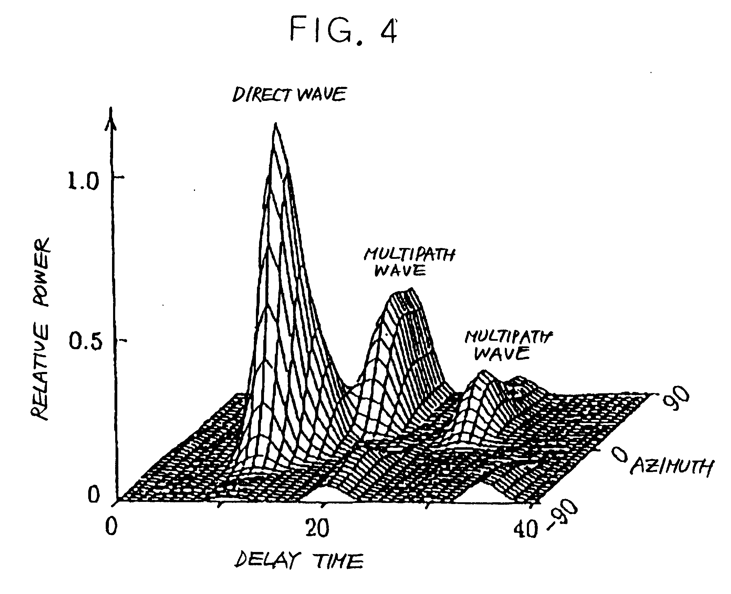

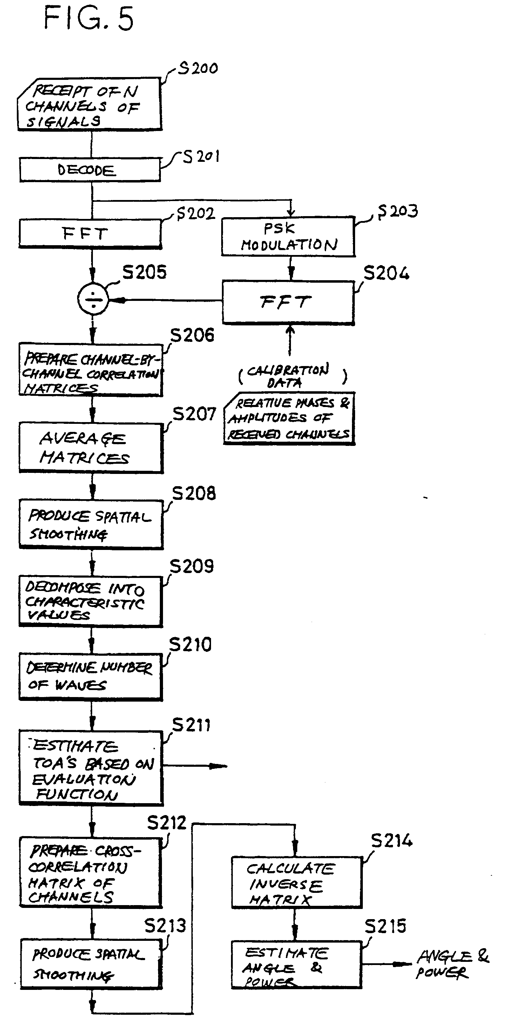

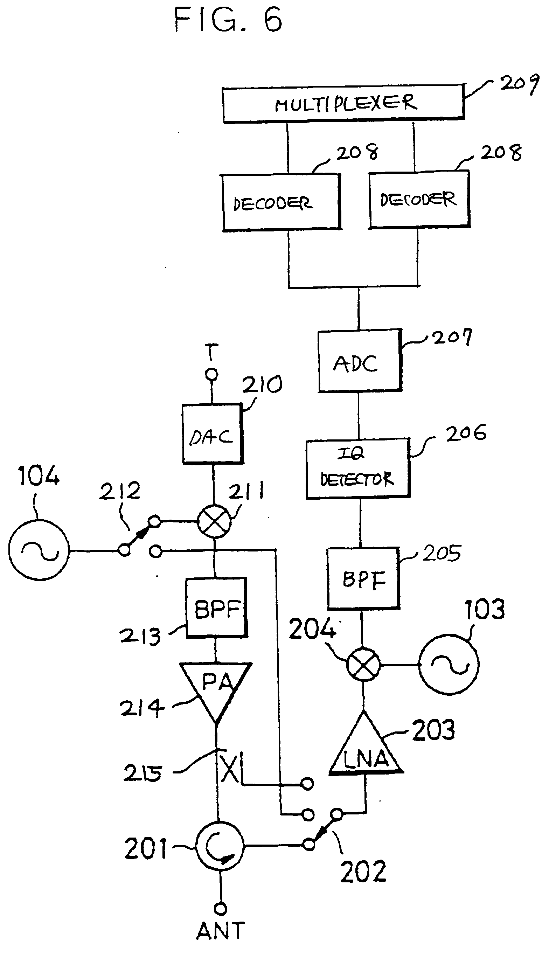

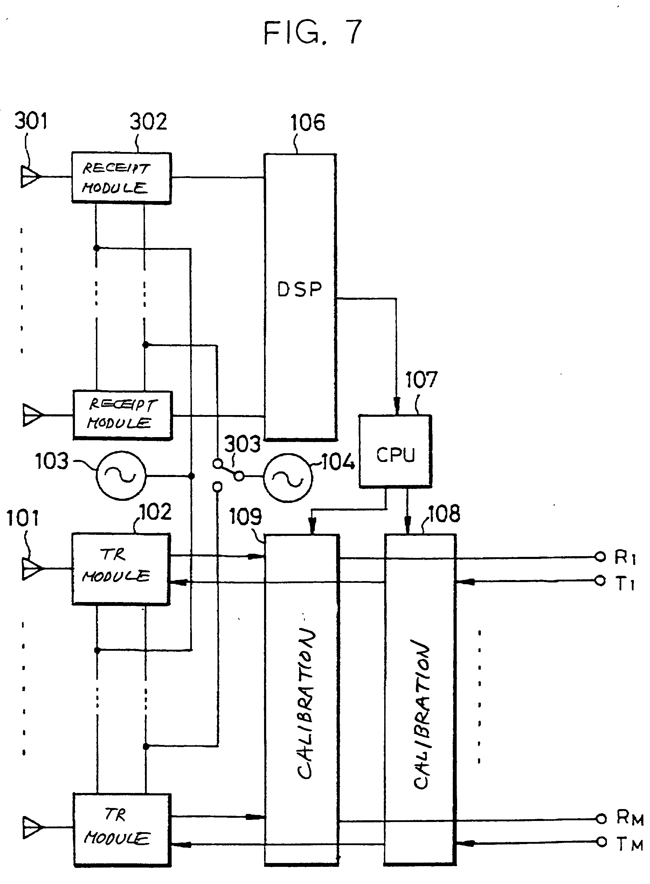

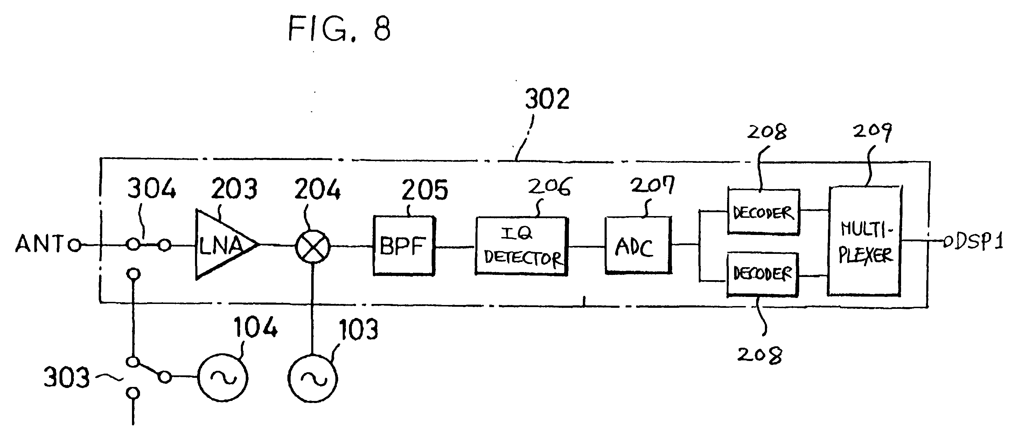

Figure 2 shows a cross-section of the device according to the invention.

With reference to the above figures, a footpeg support comprises a body 1 which supports a footpeg 2 on which a rider places his foot when riding a motorcycle. The latter comprises a frame 3 to which the body of the support 1 is attached.

According to the invention, the body 1 comprises an articulated structure having at least a first and a second element, denoted 5 and 6 respectively in the figures, which are connected (hinged) together indirectly by means of an eccentric body (or simply an eccentric) 21 and a suitable shim plate 35, all of which can be locked in position by a screw 7 (or similar fastening member), the elements 5, 6 being fixed to the frame by means of screws 9 and 10.

With reference to the specific embodiment of the invention shown in the figures, the body 1 is in the form of an articulated triangle whose ends can be fixed to the frame 3 by means of the screws 9 and 10 and in which the footpeg 2 is attached in the vicinity of its vertex. For this purpose the body comprises a first element 5 positioned below a second element 6, the first element acting as a link which supports the second element 6. The free end 14 of the second element 6 carries the footpeg 2 which is fixed to it by means of an ordinary pin 15, a spring or equivalent elastic member 16 being placed on the pin 15 and acting on the footpeg in a manner known per se.

The element 6 supporting the footpeg comprises a portion 17 having a relatively large surface area and comprising a seat 20 containing, in a manner such that it can rotate freely, the eccentric body 21 with a blind threaded hole 22 and a recess or notch 23 located next to this hole and formed in a face 24 of the said body. More specifically, the hole 22 is formed in a cylindrical portion 25 which projects out from a face 26 of the body 21, on the opposite side to the face 24 mentioned above, and penetrates into a hole 27 formed in a first end 28 of the element or link 5. The head 7A of the screw 7 abuts against a flat face 30 of the element 5 so that when the screw is screwed into the hole or threaded seat 22 it fastens the elements 5 and 6 together. Inserted between a face 33 - located on the opposite side to the face 30 of the end 28 of the link 5 - and the face 26 of the body 21 is a perforated shim plate 35 which is attached to the portion 25 of the said body and contained within an annular seat 37 in the portion 17 of the element 6 formed around the seat 20 for the body 21. This body is therefore eccentrically connected to the link 5 but can still rotate in the seat 20. This link comprises a second end 38 which is fixed to the frame 3 by the screw 9.

An annular portion 40 of the face 24 of the body 21 has numbered notches which are used in conjunction with a fixed reference marker 41 provided on the surface of the portion 17. By moving the body 21 inside the seat 20 and positioning the annular portion 40 accordingly relative to the reference marker 41, it is possible to adjust the height of the footpeg 2.

In order to make this adjustment, it is first of all necessary to loosen the two fixing screws 9 and 10 and the eccentric screw 7; an ordinary screwdriver is then used in the recess 23 in the body 21. Rotating this body in a clockwise direction moves the element 6, and therefore the footpeg 2, upwards, away from the ground, while rotating the eccentric in an anticlockwise direction moves the element and the footpeg downwards. Once the footpeg has reached the desired position, the screws 7, 9 and 10 are once again tightened in order to hold the footpeg in this position.

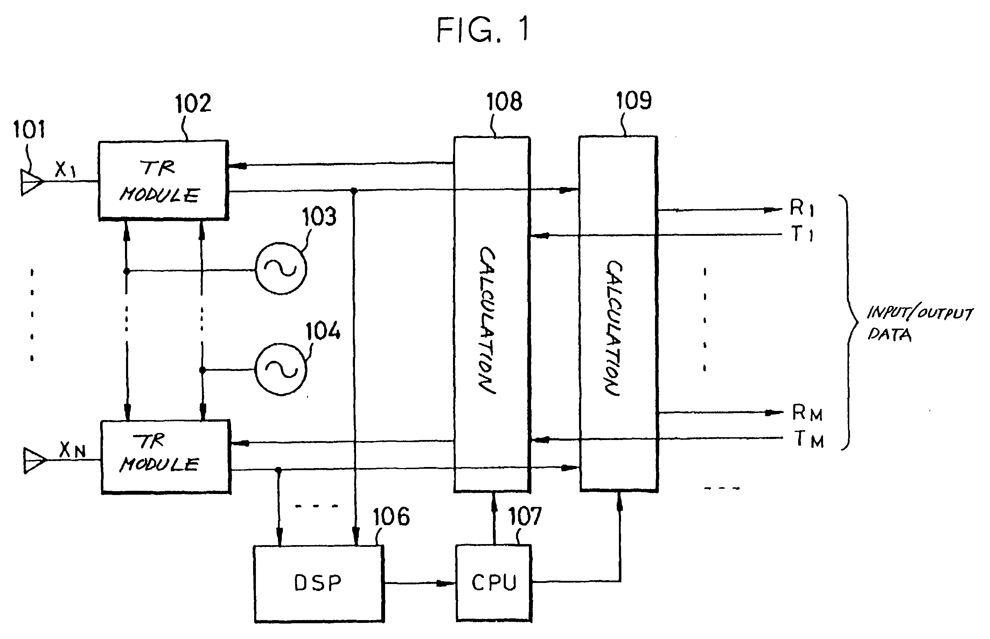

In the embodiment shown in Figure 1, taking the position marked O (highest point of the footpeg in the area where the foot is actually supported) as the starting point, the height of the footpeg can be adjusted within the range defined by position A (maximum travel upwards) and position B (maximum travel downwards), and can assume any position in between. Continuous adjustment is thus possible, the magnitude of which can be determined by virtue of the notches marked specifically for this purpose on the body 21 and which also act as a reference to ensure that both the left and right footpegs are adjusted to the same height.

Needless to say, it is possible to have narrower or broader ranges of adjustment by altering the dimensions of the body 21.

By virtue of the invention, the driving position can therefore be altered as desired by the rider to suit his size and the position chosen.

In the embodiment described, the link 5 is positioned below the element 6 and therefore acts as a strut for the latter; but it is also possible to position the link above the element 6, in which case it acts as a tie for the latter.

According to a variant of the invention, by using the same components as those of the embodiment described and illustrated in the figures but attaching links 5 of different lengths, it is possible to vary the initial position of the footpegs (macroadjustment), so that they can be mounted on different motorcycle models while retaining the same range of adjustment on account of the eccentric (microadjustment). The same result can be achieved by using a link 5 of adjustable length for the macroadjustment.

If, in addition to the footpeg 2, the gearchange or rear brake pedal were also attached to the element 6 (one to each of the footpeg supports respectively), the invention would allow the height of these members from the ground to be adjusted simply and rapidly, while still maintaining the correct distance between them.

The embodiment described and the various embodiments suggested are all encompassed within the same inventive concept. However, still others are possible, such as one in which the body 1 is in the form of an articulated quadrilateral or comprises a plurality of elements that are articulated together such as to allow the height of the footpeg, and optionally the gearchange and rear brake pedals, to be adjusted in a quick and simple manner that does not require detaching the body 1 from the vehicle. These other embodiments should also be considered as being covered by the scope of the present document.

## Claims

1. Footpeg support for a motorcycle or the like which supports a footpeg (2) and optionally the gearchange or rear brake pedal of the motorcycle, the said support being attached to a vehicle frame (3), characterized in that it comprises an articulated structure (1) having at least a first and a second element (5, 6) which are hinged together (at 7) and each of which is fixed (at 9, 10), in a manner such that they can be loosened, to the abovementioned frame (3), a second (6) of these elements (5, 6) supporting the footpeg (2), the fact that the means by which these elements (5, 6) are fastened to the frame (3) can be loosened without having to remove the elements themselves from the latter, together with the loosening of the common fastening means (7), making it possible to alter the height of the footpeg (2) from the surface on which the vehicle is located, these fastening means being subsequently tightened and thus locking the footpeg (2) in the position reached.

2. Footpeg support according to Claim 1, characterized in that the articulated structure (1) is an articulated triangle.

3. Footpeg support according to Claim 2, characterized in that the footpeg (2) is attached in the vicinity of a vertex of the structure in the form of an articulated triangle (1).

4. Footpeg support according to Claim 2, characterized in that the second element (6) carrying the footpeg (2) comprises a portion (17) which is indirectly fixed to the first element (5) by means of a fastening member (7) and an eccentric member (21) which engage in a first end (28) of this first element.

5. Footpeg support according to Claim 4, characterized in that the fastening member is a screw or similar component (7).

6. Footpeg support according to Claim 4, characterized in that the fastening member is a pin without thread.

7. Footpeg support according to Claim 5, characterized in that the screw (7) engages in a seat (22) formed eccentrically in a body (21), the latter being inserted such that it can rotate in a corresponding seat (20) formed in the second element, this body (21) defining the eccentric member.

8. Support according to Claim 7, characterized in that the seat (22) for the screw (7) which fastens the first and the second elements together is formed in a cylindrical portion (25) which projects out from the said body (21), this portion (25) being inserted such that it can rotate but can also be locked in position, in a through hole (27) formed in the first end (28) of the first element, the tightened screw (7) preventing relative rotation between the cylindrical portion (25) and this end (28).

9. Footpeg support according to Claim 7, characterized in that the body (21) comprises a seat (23) which is eccentric relative to the seat (22) containing the screw (7) which fastens the first and the second elements (5, 6) together, and is designed to engage with a tool in order to rotate the said body (21) relative to the second element (6) to which it is attached, this rotation, which can be carried out once the screw (7) has been loosened, making it possible to alter the height of the footpeg (2), and optionally of the gearchange and brake pedals, from the ground.

10. Footpeg support according to Claim 7, characterized in that the body (21) comprises a portion (40) provided with graduated reference markings which are designed to be used in conjunction with a fixed indicator (41) on the second element (6), this portion (40) being designed to allow the height of the footpeg (2) from the ground to be altered in a calibrated way.

11. Footpeg support according to Claim 1, characterized in that the first element (5) acts as a strut for the second (6).

12. Footpeg support according to Claim 1, characterized in that the first element (5) acts as a tie for the second (6).

13. Footpeg support according to Claim 1 and 11 or 1 and 12, characterized in that the first element (5) has a variable and adjustable length.
